# EUROPEAN PATENT SPECIFICATION

(11) **EP 4 261 085 B1**
(45) Date of publication and mention of the grant of the patent: **16.07.2025**
(21) Application number: 22167552.3
(22) Date of filing: 11.04.2022
(51) Int. Cl.: B60R 9/058

(54) **ROOF RACK FOR A VEHICLE**
DACHTRÄGER FÜR EIN FAHRZEUG
GALERIE DE TOIT POUR UN VÉHICULE

(43) Date of publication of application: 18.10.2023
(73) Proprietor: Thule Sweden AB, 335 04 Hillerstorp (SE)
(72) Inventor: BERGMAN, Fredrik, 567 92 Vaggeryd (SE); LARSSON, Wilhelm, 33155 Värnamo (SE); POULSEN, Jonas, 33191 Värnamo (SE)
(74) Representative: Kransell & Wennborg KB

(56) References cited:
- EP-A1- 1 008 489
- EP-B1- 0 736 417
- FR-A5- 2 147 385
- IT-A1- FI20 110 046
- US-A1- 2019 061 635

## Description

### TECHNICAL FIELD

The present disclosure relates to a roof rack for a vehicle. The present disclosure further relates to a vehicle roof, a roof rack alignment tool and an end cap for a roof rack cross bar member of a roof rack.

### BACKGROUND

Roof racks comprising cross bars are known for providing improved load carrying capacity for vehicles.

A roof rack for a vehicle typically includes a roof rack crossbar, i.e. a cross bar member, and two roof rack foot members configured for attachment to the vehicle. There are different types of roof racks and roof rack foot members. For example, roof rack foot members may be configured for attachment to a guide rail or the like provided on the roof of the vehicle. Thereby, the roof rack may be provided at any position along the extension of the guide rail. Another type of roof rack foot member is the so called fix point roof rack foot, which is configured for attachment to a fix point attachment position on the vehicle. For example, the fix point attachment position is provided on the roof of the vehicle and may be configured as a threaded screw hole close to an edge of the roof which can receive a matching threaded screw for attaching the roof rack foot member to the roof.

One such fix point roof rack foot may be found in EP 3 225 468 A1, which discloses a fix point load carrier foot for a roof rack for a vehicle. The load carrier foot comprises a body and the body comprises a vehicle facing surface and a load carrying bar facing surface. An attachment member is connectable to a fixed connection point on the vehicle and has an attachment position and a release position. Another example of a roof rack with a fix-point attachment configuration can be found in US2019061635.
EP 0 736 417 A1 relates to a roof rack which is supported on each side of the vehicle by feet and clamped down on each side by a tensioner which is attached with one end to a cross member and with the other end by pulling a securing grip under the edge of the roof.
EP 1 008 489 A1 relates to a roof rack which has spring supported rollers mounted on the feet in such a way that the feet are supported via the rollers on a bearing surface of vehicle rails.
FR 2147385 A5 relates to a fixing device for roof tacks of motor vehicles.
US 2019/061635 A1 relates to a roof rack attachment system for a glass roof vehicle, where a roof rack tower is attached over a seam between the glass roof and a structural portion of the vehicle.
IT FI20 110 046 A1 relates to a connection device for fixing a cross-bar to a longitudinal rail. It discloses a roof rack for a vehicle according to the preamble of claim 1.

Even though there exist different types of roof racks with fix point attachment, there is still a strive to develop further improved and/or alternative roof racks for vehicles. For example, there is a strive to develop improved roof rack technology which is advantageous for vehicle roofs comprising glass roof panels.

### SUMMARY

In view of the above, an object of the present disclosure is to provide an improved roof rack for a vehicle, which at least alleviates some of the drawbacks of the prior art, or which at least provides a suitable alternative. Other objects of the present disclosure are to provide an improved method for mounting a roof rack, a vehicle roof, a roof rack alignment tool, and an end cap for a cross bar member of a roof rack, which at least alleviates some of the drawbacks of the prior art, or which at least provides a suitable alternative.

According to the invention, corresponding to a first aspect of the disclosure, the object is achieved by the subject matter in independent claim 1. Advantageous embodiments may be found in the dependent claims and in the accompanying description and drawings.

Hence, according to the first aspect, there is provided a roof rack for a vehicle. The roof rack comprises:
- a roof rack foot member comprising a vehicle roof support surface,
- an engagement member for engaging with a vehicle bracket of the vehicle,
- a tightening member for tightening the engagement member, and
- a cross bar member for carrying a load on the vehicle.

The tightening member is coupled to the roof rack foot member and the cross bar member for securing the roof rack to the vehicle. Furthermore, the tightening member comprises a first engagement section and the engagement member comprises a second engagement section, which first and second engagement sections are connectable and correspondingly configured for tightening the engagement member with respect to the vehicle bracket.

By the provision of the roof rack as disclosed herein, especially with respect to the first aspect, an improved roof rack for a vehicle is provided. For example, the configuration of the roof rack as disclosed herein is based on a realization that certain vehicles, especially vehicles comprising narrow channels with vehicle brackets for roof racks and/or vehicles with glass roof panels, may more easily be damaged when mounting a roof rack thereto. For example, for such vehicles there is a large risk of scratching vehicle body panels and damaging glass roof panels during mounting and use of the roof rack. By the roof rack according to the present disclosure, especially according to the first aspect, such risks can be mitigated.

The roof rack has a width extension, a height extension and a longitudinal extension corresponding to a longitudinal extension of the cross bar member.

According to the invention, the first engagement section is connectable to the second engagement section in a first connection direction which is different from the height extension, wherein the first connection direction corresponds to the longitudinal extension of the roof rack. The first connection direction is directed away, in the longitudinal extension, from a second roof rack foot member, wherein the second roof rack foot member is provided on an opposite side of the cross bar member. By configuring the roof rack with a connection direction away from the second roof rack foot member in the longitudinal extension, the mounting/dismounting procedure of the roof rack to/from the vehicle may be facilitated. The first connection direction implies that the mounting and/or dismounting procedure for a user can be facilitated. For example, it allows the user to move the tightening member in the first connection direction with one hand while holding in the roof rack foot member and/or the cross bar member with the other hand. This procedure has shown to reduce the risk of damaging the vehicle during mounting.

Optionally, the first engagement section is configured for tightening the engagement member with respect to the vehicle bracket by application of a first tightening force exerted on the second engagement section, wherein the engagement member comprises an engaging portion for engaging with the vehicle bracket of the vehicle and wherein the tightening member is configured for tightening the engaging portion with respect to the vehicle bracket so that a second tightening force is exerted on the engaging portion by the vehicle bracket. The engagement member is optionally configured so that the second tightening force and the first tightening force are substantially aligned. This configuration has shown to significantly reduce the risk of unwanted bending moments on the roof rack foot member. For example, it has been realized that prior art designs have resulted in unwanted bending moments which forces the roof rack foot members inwards towards the vehicle roof. By reducing or avoiding such unwanted bending moments, the risk of damaging vehicle body panels, such as glass roof panels, can be mitigated.

Optionally, the engagement member comprises an engaging portion for engaging with the vehicle bracket of the vehicle and the tightening member comprises a cross bar engaging portion for engaging with the cross bar member, wherein the tightening member is configured to transfer forces along a substantially straight line from the engaging portion to the cross bar engaging portion. This configuration also implies a reduced risk of unwanted bending moments.

According to the invention, the second engagement section comprises an opening, such as a slot, for receiving the first engagement section in a first connection direction, such as an opening facing in a direction corresponding to a longitudinal extension of the cross bar member. This implies facilitated mounting/dismounting, mitigating the risk of damaging vehicle body panels, such as glass roof panels. This also results in a more robust connection between the tightening member and the engagement member.

Optionally, the first engagement section is T-formed, L-formed, J-formed, or ball-formed. This implies a robust and reliable mechanical coupling between the first and second engagement sections.

Optionally, the roof rack further comprises a biasing member for biasing the tightening member towards a disconnected state with respect to the engagement member. This configuration implies facilitated mounting/dismounting of the roof rack for a user. For example, this has shown to result in fewer manual operations by the user during mounting/dismounting. For example, the biasing member may be a spring-biased member, such as any one or a combination of a torsion spring exerting a spring force on the tightening member, a helical coil spring, a tension/extension spring and/or a compression spring.

Optionally, the roof rack foot member comprises a guide surface for the tightening member, such as a guide slot, which is adapted to align the first engagement section with respect to the second engagement section and/or adapted to accommodate forces exerted on the tightening member which are directed in directions different from a longitudinal extension of the tightening member. Thereby, a more robust connection between the tightening member and the roof rack foot member can be achieved. Further, aligning the first engagement section with respect to the second engagement section implies a facilitated mounting/dismounting procedure. Accordingly, by way of example, the guide surface may be adapted to guide the tightening member in a guiding direction between a disconnected state and a first connected state, wherein the guiding direction corresponds to a longitudinal extension of the cross bar member.

Optionally, the engagement member is a hook member.

Optionally, the engagement member is detachable from the roof rack. Thereby, the engagement member can be provided in engagement with the vehicle bracket before the roof rack foot member is provided onto the vehicle roof. This implies facilitated mounting/dismounting of the roof rack, reducing the risk of damaging vehicle body panels.

Optionally, the engagement member is a bent sheet-metal element, such as the second engagement section is formed by bent sheet-metal, for example bent to hook into a slot formed in itself, the engagement member is bent to form an open hook end, and/or it is bent to form a closed loop end. Thereby, a robust engagement member can be provided which also is easy to manufacture, implying reduced manufacturing costs.

Optionally, the vehicle roof support surface is adapted to only rest on a vehicle roof surface of the vehicle which is provided on one side with respect to the vehicle bracket, as seen in a direction corresponding to the longitudinal extension of the cross bar member. Additionally, or alternatively, the vehicle roof support surface is adapted to only rest on a vehicle roof surface of the vehicle which is provided on one side with respect to the engagement member, as seen in a direction corresponding to the longitudinal extension of the cross bar member. Thereby, the risk of damaging parts on the other side, such as a glass roof panel, can be mitigated. For example, the tightening member may be coupled to the roof rack foot member and the cross bar member so that the roof rack foot member is prevented from inclining inwards towards the vehicle when the tightening member is tightening the engagement member with respect to the vehicle bracket. Still optionally, the tightening member, with its coupling to the roof rack foot member and the cross bar member, and the engagement member, with an engaging portion for engaging with the vehicle bracket, may be configured so that no inwardly directed bending moments is exerted at the engaging portion where it engages with the vehicle bracket.

Optionally, the roof rack foot member is configured to avoid contact with an adjacent glass roof panel of the vehicle when the roof rack is mounted on the vehicle.

Optionally, the roof rack foot member comprises an alignment portion for aligning the roof rack foot member with a roof channel of the vehicle. The vehicle bracket is preferably provided in the roof channel of the vehicle. The alignment portion is preferably configured to extend into the roof channel when the roof rack foot member is mounted to the vehicle.

According to the invention, the first engagement section is further connectable to the second engagement section in a second connection direction which corresponds to the longitudinal extension of the tightening member.

Optionally, the tightening member and the guide surface, as seen in a sectional plane being perpendicular to a longitudinal extension of the tightening member, are formed to prevent any rotational movement of the tightening member about the longitudinal extension of the tightening member. Thereby, a more robust connection can be provided, preventing the tightening member from rotating with respect to the roof rack foot member.

As mentioned in the above, the tightening member is coupled to the roof rack foot member and the cross bar member for securing the roof rack to the vehicle. For example, the tightening member may be coupled to the roof rack foot member and the cross bar member by providing the tightening member from the cross bar member via the roof rack foot member, such as through the roof rack foot member, so that it engages with the engagement member. As another example, the tightening member may be coupled to the roof rack foot member and the cross bar member by providing the tightening member from the roof rack foot member so that it engages with the engagement member, whereby the roof rack foot member is in engagement with the cross bar member. Accordingly, the tightening member may be directly or indirectly coupled to any one of the roof rack foot member and the cross bar member so that the tightening member secures the roof rack to the vehicle.

Optionally, the tightening member may be accessible for a user from the cross bar member so that the user can tighten the tightening member. As yet another example, the tightening member may be accessible for a user from the roof rack foot member so that the user can tighten the tightening member.

According to a second aspect of the disclosure, the object is achieved by the subject matter in independent claim 12. Advantageous embodiments may be found in the dependent claims and in the accompanying description and drawings.

Hence, there is provided a method for mounting a roof rack to a vehicle. The roof rack is a roof rack according to any one of the embodiments of the first aspect.

**The** method comprises:
- aligning and positioning the engagement member with respect to the vehicle bracket,
- positioning the roof rack foot member with the vehicle roof support surface onto the vehicle so that the tightening member is aligned with the engagement member,
- tightening the engagement member by use of the tightening member.

By the configuration of the roof rack, and by the mounting method as disclosed herein, the roof rack can be mounted to the vehicle in a manner so that the risk of damaging the vehicle is mitigated. In addition, the mounting procedure can be facilitated. For example, by the roof rack configuration as disclosed herein, there is no need to use a separate foot pad member in-between the vehicle roof and the roof rack foot member. Rather, the roof rack foot member can be provided directly onto the vehicle after the engagement member has been positioned with respect to the vehicle bracket.

### BRIEF DESCRIPTION OF THE DRAWINGS

With reference to the appended drawings, below follows a more detailed description of embodiments of the disclosure cited as examples.

In the drawings:
Figs. 1a-b show sectional views of a roof rack according to an example embodiment of the present disclosure,
Fig. 1c shows a perspective view of a roof rack according to an example embodiment of the present disclosure,
Fig. 1d shows a perspective view of a roof rack according to an example embodiment of the present disclosure where certain parts have been omitted to better illustrate certain features of the roof rack,
Figs. 2a-b show perspective views of an engagement member according to an embodiment of the present disclosure,
Fig. 3 shows a flowchart of a mounting method according to an example embodiment of the present disclosure,
Fig. 4a shows a side view of a roof rack and a vehicle roof according to an example embodiment of the present disclosure,
Figs. 4b-c show perspective views of a vehicle bracket and an engagement member according to example embodiments of the present disclosure,
Fig. 5 shows a side view of a roof rack and a vehicle roof according to an example embodiment of the present disclosure,
Fig. 6a shows a perspective view of a roof rack and a vehicle roof according to an example embodiment of the present disclosure,
Fig. 6b shows a side view of the roof rack and vehicle roof as shown in fig 6a,
Fig. 6c shows a perspective view of an engagement member as also shown in figs. 6a-b,
Fig. 7a shows a side view of a roof rack and a vehicle roof according to an example embodiment of the present disclosure,
Figs. 7b-c show perspective views of an engagement member as also shown in fig. 7a,
Fig. 8 shows a side view of a roof rack and a vehicle roof according to an example embodiment of the present disclosure,
Figs. 9a-b show perspective views of a roof rack alignment tool according to an example embodiment of the present disclosure that does not belong to the invention,
Figs. 10a-d show schematic side views of roof rack alignment tools according to example embodiments of the present disclosure that does not belong to the invention,
Figs. 11a-b show perspective views of a roof rack according to an example embodiment of the present disclosure that does not belong to the invention,
Fig. 11c shows a side view of a roof rack as shown in fig. 11b, and
Fig. 11d shows a schematic view of an end cap and cover engaging flanges of a cross
bar channel according to an example embodiment of the present disclosure that does not belong to the invention.

The drawings show diagrammatic exemplifying embodiments of the present disclosure and are thus not necessarily drawn to scale. It shall be understood that the embodiments shown and described are exemplifying and that the disclosure is not limited to these embodiments. It shall also be noted that some details in the drawings may be exaggerated in order to better describe and illustrate the disclosure. Like reference characters refer to like elements throughout the description, unless expressed otherwise.

### DETAILED DESCRIPTION OF EXAMPLE EMBODIMENTS OF THE DISCLOSURE

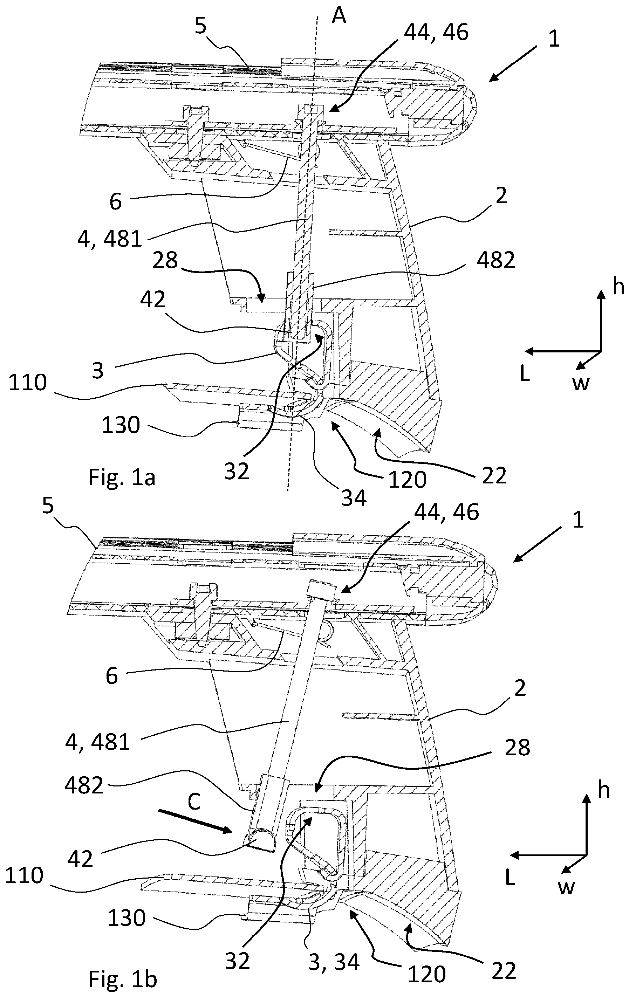

Figs. 1a and 1b depict sectional views of a roof rack 1 for a vehicle (not shown) according to an example embodiment of the present disclosure. The roof rack 1 has a width extension w, a height extension h and a longitudinal extension L. The sectional view, or cross-section, is a plane defined by the longitudinal extension L and the height extension h. The width extension w corresponds to a longitudinal extension of the vehicle.

The roof rack 1 comprises:
- a roof rack foot member 2 comprising a vehicle roof support surface 22. Accordingly, the vehicle roof support surface 22 is intended to be supported by a surface of the vehicle (not shown), such as a body side panel of the vehicle.

The roof rack 1 further comprises:
- an engagement member 3 for engaging with a vehicle bracket 130 of the vehicle,
- a tightening member 4 for tightening the engagement member 3, and
- a cross bar member 5 for carrying a load on the vehicle.

The tightening member 4 is coupled to the roof rack foot member 2 and the cross bar member 5 for securing the roof rack 1 to the vehicle.

As shown, the longitudinal extension L of the roof rack 1 corresponds to a longitudinal extension of the cross bar member 5.

Furthermore, the tightening member 4 comprises a first engagement section 42 and the engagement member 3 comprises a second engagement section 32, which first and second engagement sections 42, 32 are connectable and correspondingly configured for tightening the engagement member 3 with respect to the vehicle bracket 130.

In fig. 1a, the first engagement section 42 is connected to the second engagement section 32, whereas in fig. 1b, the first engagement section 42 is disconnected from the second engagement section 32.

The first engagement section 42 is as shown in e.g. fig 1b connectable to the second engagement section 32 in a first connection direction C (indicated by an arrow) which is different from the height extension h. More particularly, in the shown embodiment, the first connection direction C corresponds to the longitudinal extension L of the roof rack 1. More precisely, as shown, the first connection direction C is directed away, in the longitudinal extension L, from a second roof rack foot member (not shown) which is provided on an opposite side of the cross bar member 5. Accordingly, when disconnecting the tightening member 4 from the engagement member 3, a disconnection direction will be directed in an opposite direction to the first direction C.

The engagement member 3 as shown comprises an engaging portion 34 for engaging with the vehicle bracket 130 of the vehicle and the tightening member 4 comprises a cross bar engaging portion 44 for engaging with the cross bar member 5. As shown in fig. 1a, the tightening member 4 may be configured to transfer forces along a substantially straight line A from the engaging portion 34 to the cross bar engaging portion 44. Thereby, unwanted bending moments exerted at the engaging portion 34 can be mitigated.

As depicted in e.g. figs. 1a-b, the tightening member 4 may be a screw member. Accordingly, as shown, the tightening member 4 may comprise a tightening tool engaging portion 46, which herein is a screw head. Thereby, a tightening tool (not shown) may be inserted from above through an opening of the cross bar member 5, such as through as a cross bar channel, to tighten the tightening member 4 with respect to the engagement member 3.

As further depicted e.g. in figs. 1a-b, the roof rack 1 may further comprise a biasing member 6 for biasing the tightening member 4 towards a disconnected state, i.e. as shown in fig. 1b, with respect to the engagement member 3. In the shown example, the biasing member 6 is a spring-biased member, and more specifically a torsion spring which biases the tightening member 4. The biasing member 6 is mechanically connected to the cross bar member 5 and the roof rack foot member 2.

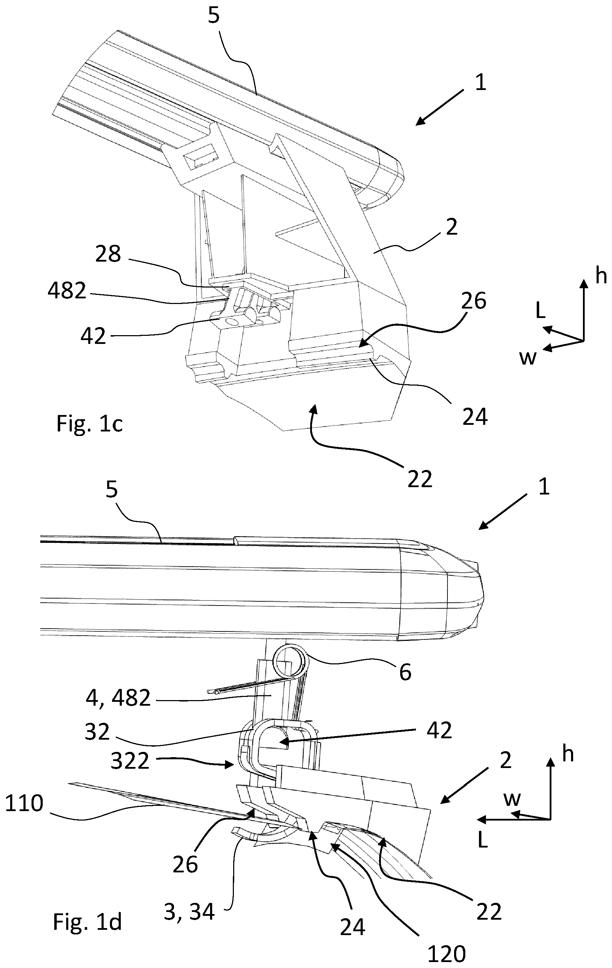

The roof rack foot member 2 may comprises a guide surface 28 for the tightening member 4, such as a guide slot 28, which is adapted to align the first engagement section 42 with respect to the second engagement section 32 and/or adapted to accommodate forces exerted on the tightening member 4 which are directed in directions different from a longitudinal extension of the tightening member 4. As shown, the tightening member 4 may be guided in the guide slot 28 in the longitudinal extension L between its connected and disconnected state with respect to the engagement member 3. The guide slot 28 is also depicted in fig. 1c, which shows the roof rack 1 with the roof rack foot member 2 in a perspective view from below.

As further depicted in e.g. figs. 1a-b, the vehicle roof support surface 22 is preferably adapted to only rest on a vehicle roof surface of the vehicle which is provided on one side with respect to the vehicle bracket 130, as seen in a direction corresponding to the longitudinal extension L of the cross bar member 5. More preferably, the tightening member 4 is coupled to the roof rack foot member 2 and the cross bar member 5 so that the roof rack foot member 2 is prevented from inclining inwards towards the vehicle when the tightening member 4 is tightening the engagement member 3 with respect to the vehicle bracket 130.

In the shown embodiment, the roof rack foot member 2 is configured to avoid contact with an adjacent glass roof panel 110 of the vehicle when the roof rack 1 is mounted on the vehicle. This may e.g. be accomplished by configuring the roof rack foot member 2 with an additional surface 26 which faces the glass roof panel 110 and which is raised with respect to the vehicle roof support surface 22. In other words, when the vehicle roof support surface 22 rests on the vehicle roof, a free space is formed between the additional surface 26 and the glass roof panel 110, as e.g. shown in fig 1d. Fig. 1d shows the roof rack 1 where certain elements of the roof rack foot member 2 have been omitted to better illustrate the other features of the roof rack 1 as described herein.

As further depicted in fig. 1d, the roof rack foot member 2 may comprise an alignment portion 24 for aligning the roof rack foot member 2 with a roof channel 120 of the vehicle. The vehicle bracket 130 is preferably provided in the roof channel 120 of the vehicle. The alignment portion 24 may for example define an intersection between the above-mentioned vehicle roof support surface 22 and the additional surface 26. The alignment portion 24 is preferably configured to extend into the roof channel 120 when the roof rack foot member 2 is mounted to the vehicle. As shown, the alignment portion 24 preferably has a main extension in the width extension w, and is further configured to prevent movement in the longitudinal extension L when it is provided in the roof channel 120. Thereby, a user can more easily position the roof rack foot member 2 on the vehicle during mounting of the roof rack 1.

With reference to e.g. figs. 1a and 1b, the first engagement section 42 is further connectable to the second engagement section 32 in a second connection direction which corresponds to the longitudinal extension of the tightening member 4. Accordingly, when the first engagement section 42 has been inserted into the second engagement section 32 as shown in fig 1a, the first engagement section 42 will be moved upwardly towards the cross bar member 5 when the tightening member 4 is tightened.

Furthermore, the tightening member 4 and the guide surface 28, as seen in a sectional plane being perpendicular to a longitudinal extension of the tightening member 4, may as shown be formed to prevent any rotational movement of the tightening member 4 about the longitudinal extension of the tightening member 4. Thereby, a more robust connection can be provided, preventing the tightening member 4 from rotating with respect to the roof rack foot member 2. In the embodiment shown in e.g. figs. 1b and 1c, the tightening member 4 is square-formed at the guide surface 28, thereby preventing any rotation therebetween about the longitudinal extension of the tightening member 4. The square-form is seen in a plane being perpendicular to the longitudinal extension of the tightening member 4.

As depicted in e.g. figs. 1a-d, the tightening member 4 may comprise at least two separate parts. A first part in the form of a screw 481 and a second part 482, which here is T-shaped, forming the first engagement section 42. The second part 482 may in an embodiment be denoted a nut member, such as a T-formed nut member. The screw 481 is insertable into a threaded hole of the second part 482. Accordingly, the tightening member 4 can be tightened with respect to the engagement member 3 by screwing the screw 481 further into the hole of the second part 482.

As further depicted in e.g. figs. 1a-d, the first and second engagement sections 42, 32 are correspondingly configured by respective curved surfaces which are at least partly matching surfaces. More precisely, as shown, the second part 482 of the tightening member 4 may comprise a convexly shaped curved surface which at least partly matches with a corresponding concavely shaped surface of the second engagement section 32 of the engagement member 3. By having such matching surfaces, forces can be transferred therebetween in a more predicted manner, thereby avoiding e.g. any unwanted bending moments.

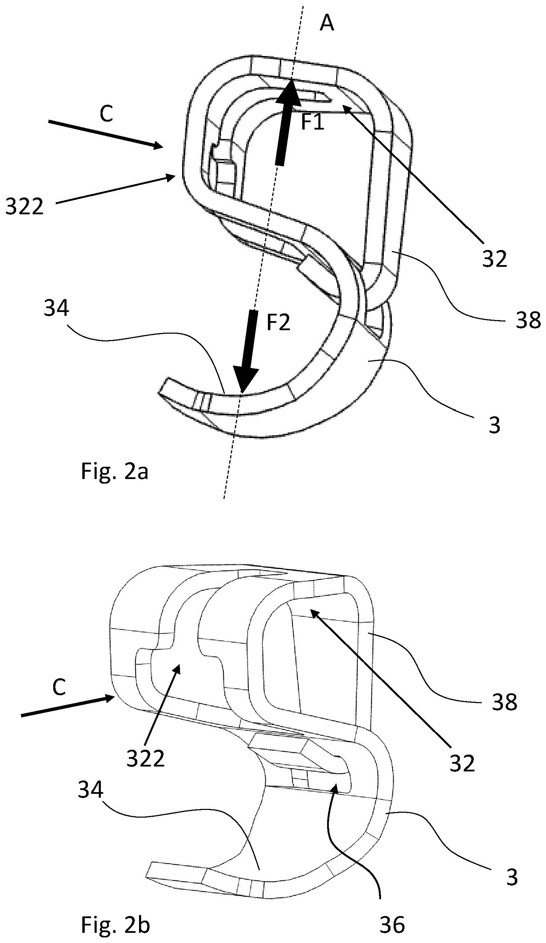

With reference to figs. 2a-b, a more detailed perspective view of an engagement member 3 according to an example embodiment of the disclosure is shown. The engagement member 3 in figs. 2a-b corresponds to the engagement member 3 as shown in figs. 1a-d.

More specifically, as may be gleaned in fig. 2a, the first engagement section 42 (not shown) is configured for tightening the engagement member 3 with respect to the vehicle bracket 130 by application of a first tightening force F1 exerted on the second engagement section 32. The engagement member 3 comprises as shown an engaging portion 34 for engaging with the vehicle bracket 130 of the vehicle and the tightening member 4 (not shown) is configured for tightening the engaging portion 34 with respect to the vehicle bracket 130 so that a second tightening force F2 is exerted on the engaging portion 34 by the vehicle bracket 130. The engagement member 3 is configured so that the second tightening force F2 and the first tightening force F1 are substantially aligned. As shown, the first and second forces F1 and F2 are provided along the line A as also depicted in fig. 1 a.

This configuration may for example be accomplished in that the second engagement section 32 comprises an opening 322, such as a slot 322, for receiving the first engagement section 42 in the first connection direction C, see fig. 2b. The opening faces in a direction which corresponds to the longitudinal extension L of the cross bar 5.

In the shown embodiment, the opening 322 is formed so that it can receive the above-mentioned T-formed part 482, i.e. the first engagement section 42. More particularly, in the shown embodiment, the opening 322 has a corresponding T-shape. In alternative embodiments, the first engagement section 42 may e.g. be L-formed, J-formed, or ball-formed. Accordingly, the opening 322 of the second engagement section 32 may be formed in a corresponding manner for receiving the first engagement section 42.

The engagement member 3 may as shown in figs 2a-b be a hook member. Accordingly, the engaging portion 34 is hook-formed for engagement with the vehicle bracket 130.

Preferably, the engagement member 3 is detachable from the roof rack 1. More particularly, when the tightening member 4 is disconnected from the engagement member 3, it is also completely disconnected from the roof rack 1. This allows the engagement member 3 to first be inserted in the roof channel 120 to engage with the vehicle bracket 130, whereafter the roof rack foot member 2 is mounted onto the vehicle roof. The insertion of the engagement member 3 may be performed by rotating the engagement member 3 with respect to the width extension w, corresponding to the longitudinal extension of the vehicle.

As further depicted in figs. 2a-b, the engagement member 3 may be a bent sheet-metal element, such as the second engagement section 32 is formed by bent sheet-metal, for example bent to hook into a slot 36 formed in itself, the engagement member 3 is bent to form an open hook end 34, and/or it is bent to form a closed loop end 38. Accordingly, the closed loop end 38 may form a space in which the first engagement section 42 can be received.

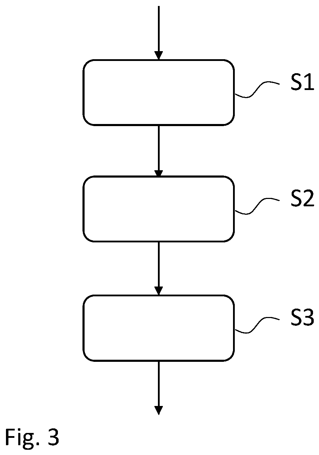

With reference to fig. 3, a flowchart of a mounting method for mounting a roof rack 1 to a vehicle according to an example embodiment of the present disclosure is shown. The roof rack 1 is a roof rack 1 according to any one of the embodiments of the first aspect of the disclosure.

The method comprises:
S1: aligning and positioning the engagement member 3 with respect to the vehicle bracket 130. This may for example be achieved by inserting the engagement member 3 into the roof channel 120, and also rotating the engagement member 3 about an axis extending in the width extension w. Further, this may also be done by use of a roof rack alignment tool 200 as disclosed herein. In the embodiment shown in figs. 1a-d, the engagement member 3 is rotated in a clockwise direction until it reaches its final position where the engaging portion 34 contacts the vehicle bracket 130.

The method further comprises:
S2: positioning the roof rack foot member 2 with the vehicle roof support surface 22 onto the vehicle so that the tightening member 4 is aligned with the engagement member 3. For example, this is shown in fig. 1b and 1a. In other words, the roof rack foot member 2 is first positioned on the vehicle, whereafter the first engagement section 42 is inserted into the second engagement section 32 in the first connection direction C.

The method further comprises:
S3: tightening the engagement member 3 by use of the tightening member 4. For example, this may be done as mentioned in the above where a tightening tool is rotating the first part 481 of the tightening member 4. The tightening tool may for example be a screwdriver which is inserted from above through an opening of the cross bar member 5 for engaging with the tightening tool engaging portion 46.

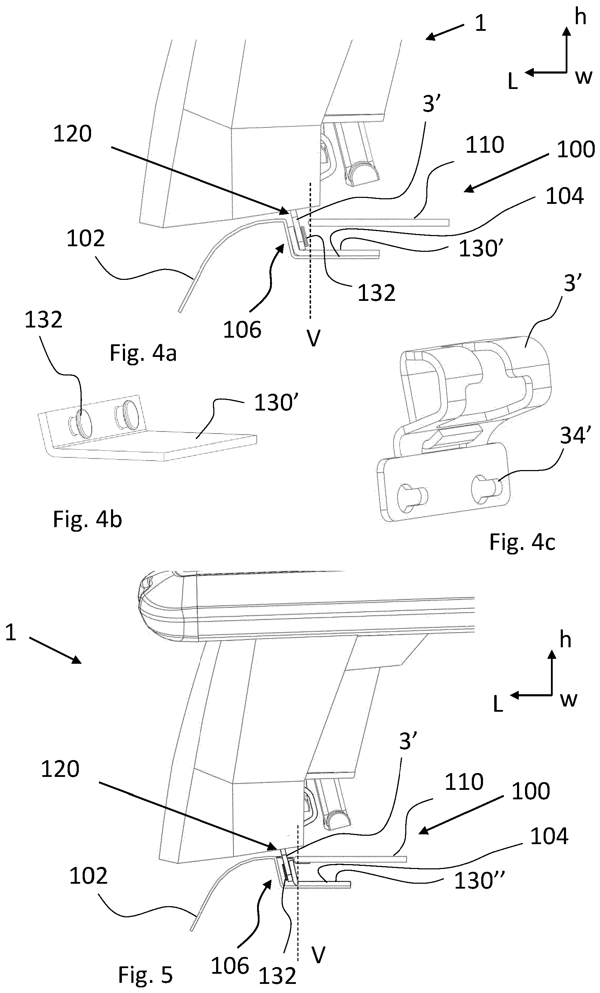

With reference to figs. 4a-c, an alternative embodiment of a roof rack 1 is shown, and also a vehicle roof 100 according to an example embodiment of the third aspect of the disclosure. Further alternative embodiments of the roof rack 1 and vehicle roof 100 are shown in figs. 5-8.

The vehicle roof 100 is shown in a cross-sectional view which is perpendicular to a longitudinal extension of the vehicle. Accordingly, the width direction w of the roof rack corresponds to the longitudinal extension of the vehicle.

The vehicle roof 100 comprises a body side panel 102, a roof top panel 110 and a roof channel 120, wherein the roof channel 120 defines an intersection between the body side panel 102 and the roof top panel 110.

The body side panel 102 is typically provided above a vehicle door (not shown).

The roof channel 120 comprises a floor 104 and a body side wall 106. The body side wall 106 is associated with the body side panel 102. In these shown embodiments, the body side wall 106 is part of the body side panel 102. As further shown, the body side wall 106 typically faces the roof top panel 110.

The roof channel 120 comprises a vehicle bracket 130', which in fig. 4a is a fix-point vehicle bracket, for securing the roof rack 1 to the vehicle roof 100.

The roof rack 1 may be configured as mentioned herein. Depending on the type of vehicle bracket, the configuration of an engagement member 3-3‴ of the roof rack1 may be altered. Accordingly, the disclosure comprises several different configurations of the engagement member 3-3‴ adapted to match with different types of vehicle brackets 130-130ʺʺ.

The vehicle bracket 130' as shown in figs. 4a-b comprises one or more protrusions 132 for an engagement member 3' of the roof rack 1 to engage with. In the shown embodiment, the engagement member 3' of the roof rack 1 holds around the one or more protrusions 132.

As further shown, the one or more protrusions 132 may be configured so that the engagement member 3' of the roof rack 1 can engage with the one or more protrusions 132 in a region of the roof channel 120 which is defined by the body side wall 106, the floor 104 and a vertical sectional plane V extending between an edge of the roof top panel 110 and the floor 104 of the roof channel 120, and also extending in a direction corresponding to a longitudinal extension of the body side wall 106. The edge of the roof top panel 110 is herein an edge at the roof channel 120. Thereby, the engagement member 3' can more easily connect with the vehicle bracket 130', thereby reducing the risk of e.g. damaging the roof top panel 110.

The one or more protrusions 132 extend from the body side wall 106. Additionally, or alternatively, the one or more protrusions may extend from the vertical sectional plane V, and/or the one or more protrusions may extend between the body side wall 106 and the vertical sectional plane V.

The one or more protrusions may be T-shaped, mushroom shaped, eye-let shaped, and/or may comprise cut-outs, so that the engagement member 3' of the roof rack 1 can engage with the one or more protrusions 132. In the embodiment shown in figs. 4a-c, the one or more protrusions 132, herein two protrusions, are mushroom shaped. The engagement member 3' comprises a corresponding engaging portion 34' which is connectable with the one or more protrusions 132. More particularly, the engaging portion 34' comprises two slots for receiving and securing the mushroom shaped protrusions 132.

As further shown in fig. 4a, the vehicle bracket 130' may be attached to the floor 104, to the body side wall 106 and to a floor portion beneath the roof top panel 110. Thereby, a secure and robust attachment is achieved, even though the roof channel 120 is relatively narrow. Alternatives are possible, such as the vehicle bracket 130' may be attached to one or more of said surfaces.

Fig. 5 shows an alternative embodiment. In this embodiment, the same engagement member 3' is used. However, the vehicle bracket 130" is different. More particularly, the one or more protrusions 132 instead extend from the vertical plane V and towards the body side wall 106. Thereby, the risk of damaging the roof top panel 110 may be further reduced.

As further shown in e.g. figs. 4a and 5, the vehicle bracket 130', 130" may be inclined, such as L-shaped, as seen in a sectional plane which is perpendicular to a longitudinal extension of the roof channel 120, with one side attached to the floor 104 and the floor portion beneath the roof top panel 110, and another side optionally attached to the body side wall 106. In fig. 4a, the other side is attached to the body side wall 106.

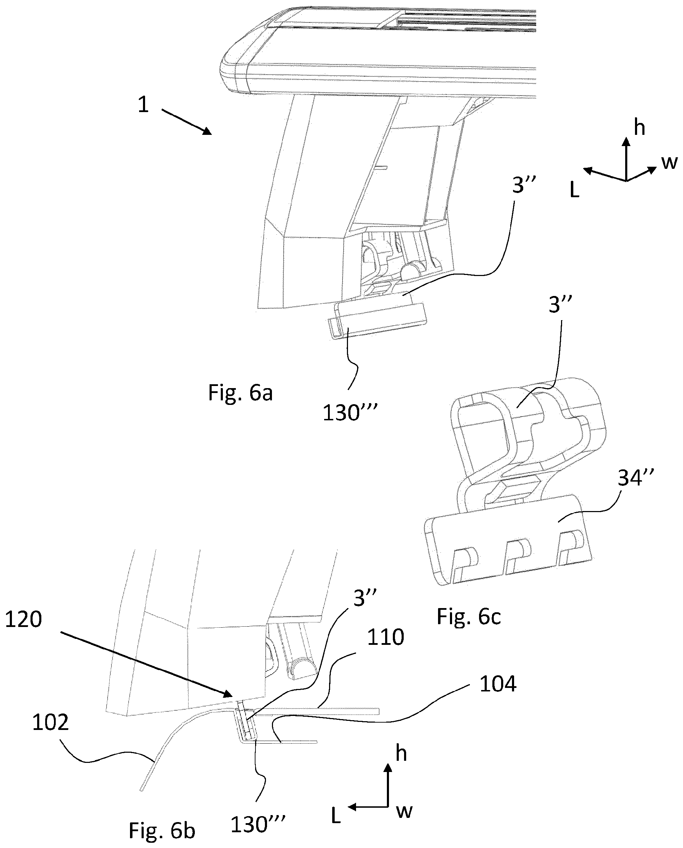

Figs. 6a-c depict another embodiment where a vehicle bracket 130‴ is U-shaped, as seen in a sectional plane which is perpendicular to a longitudinal extension of the roof channel 120.

More particularly, the U-shaped vehicle bracket 130‴ comprises one or more pin members extending across opposite side flanges of the U-shaped vehicle bracket 130"'. A corresponding engaging portion 34" of an engagement member 3" is configured to engage with the one or more pin members. In the shown embodiment, the engaging member 3" comprises three slots, or openings, in which a respective pin member can be received to secure the roof rack 1 to the vehicle roof 100. The engaging portion 34" may comprise more or fewer slots to match the number of pin members of the vehicle bracket 130"'.

A portion of the vehicle bracket which comprises means for securing the roof rack 1 to the vehicle may be provided substantially in parallel with the body side wall 106, as seen in a sectional plane which is perpendicular to a longitudinal extension of the roof channel 120. Such configuration is for example shown in figs. 4a, 5, 6b and 7a. The portion may as shown in fig. 5 be provided in parallel with and offset from the body side wall 106 so that a gap is formed between the portion and the body side wall 106. The portion may alternatively as shown in fig. 4a be provided in parallel and in connection with the body side wall 106 so that a gap is formed between the portion and the roof top panel 110.

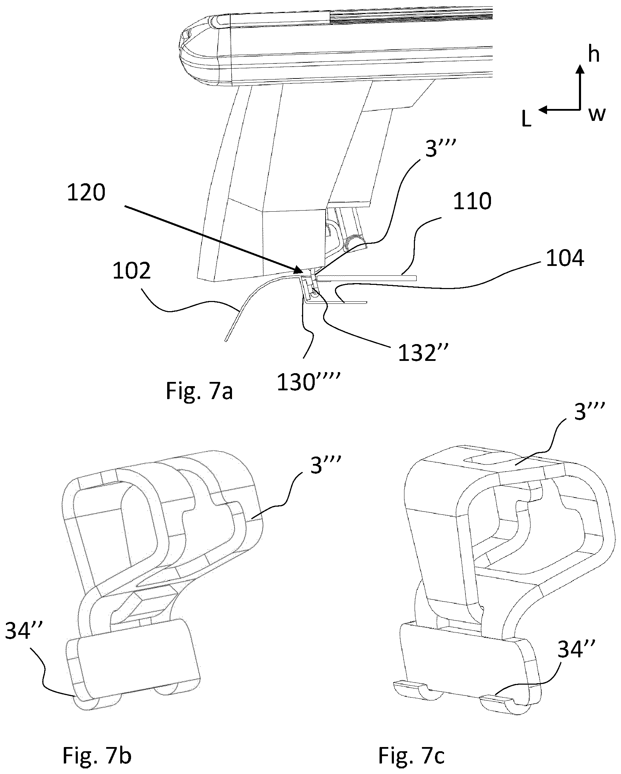

Figs. 7a-c show an alternative embodiment with a vehicle bracket 130ʺʺ comprising cut-outs 132" to engage with. Accordingly, a corresponding engaging member 3‴ is also shown which comprises a corresponding engaging portion 34‴, in this case hook-shaped members to engage with the cut-outs 132".

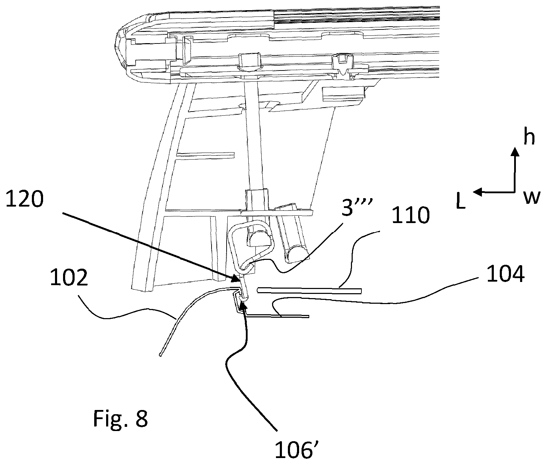

As shown in fig. 8, a vehicle bracket 106' may be an integral portion of the body side panel 102. In the shown embodiment, the vehicle bracket 106' is an integral portion of the body side wall 106. As can be further gleaned from fig. 8, the vehicle bracket 106 may be formed as an overhang portion of the body side wall 106, and may be hook-shaped, as seen in a sectional plane which is perpendicular to a longitudinal extension of the roof channel 120. Thereby, the roof rack 1 may be attached to the vehicle in the roof channel 120 at any position along the roof channel. In other words, by this configuration, it is no longer a fix-point attachment. As such, a more flexible configuration is achieved.

The roof top panel 110 is typically a glass roof panel, even though also other types of roof top panels are feasible. For example, the roof top panel may be a standard roof top panel, such as made of aluminium or steel. Alternatively, the roof top panel may be any panel which is susceptible to damage, such as a carbon fiber light-weight roof top panel.

The vehicle brackets 130-130ʺʺ may as shown be sheet metal elements, such as a bent sheet metal elements.

The roof channel 120 may have a channel opening width in the range of 5-20 mm, such as 5-15 mm or 5-10 mm.

Furthermore, the vehicle bracket 130-130ʺʺ may as depicted herein be configured so that the engagement member 3'-3‴ of the roof rack 1 can engage with the vehicle bracket 130-130ʺʺ by initially lowering the engagement member 3'-3‴ into the roof channel 120. This may be followed by moving the engagement member 3'-3‴ in a substantially horizontal direction, such as in a longitudinal direction of the roof channel 120, e.g. according to the embodiments depicted in figs. 6a-c, so that it engages with the vehicle bracket 130-130"". Additionally, or alternatively, the engagement member 3'-3‴ may be moved in a width direction of the roof channel 120, e.g. according to the embodiments depicted in figs. 4a and 5, so that it engages with the vehicle bracket 130-130"". Additionally, or alternatively, the engagement member 3'-3‴ may be rotated about an axis extending in the longitudinal extension of the roof channel 120 so that it engages with the vehicle bracket 130.

As shown in fig. 4a, to engage the engagement member 3' with the vehicle bracket 130', the engagement member 3' has to be moved in a width direction of the roof channel 120 which faces away from the roof top panel 110 and towards the body side wall 106. The opposite mounting direction is shown in fig. 5. By the configuration as shown in fig. 5, the risk of contacting the roof top panel during mounting may be further reduced.

It shall be noted that in figs. 1c, 6a-b, 7a and 8, the tightening member 4 may be gleaned in both its connected and disconnected state.

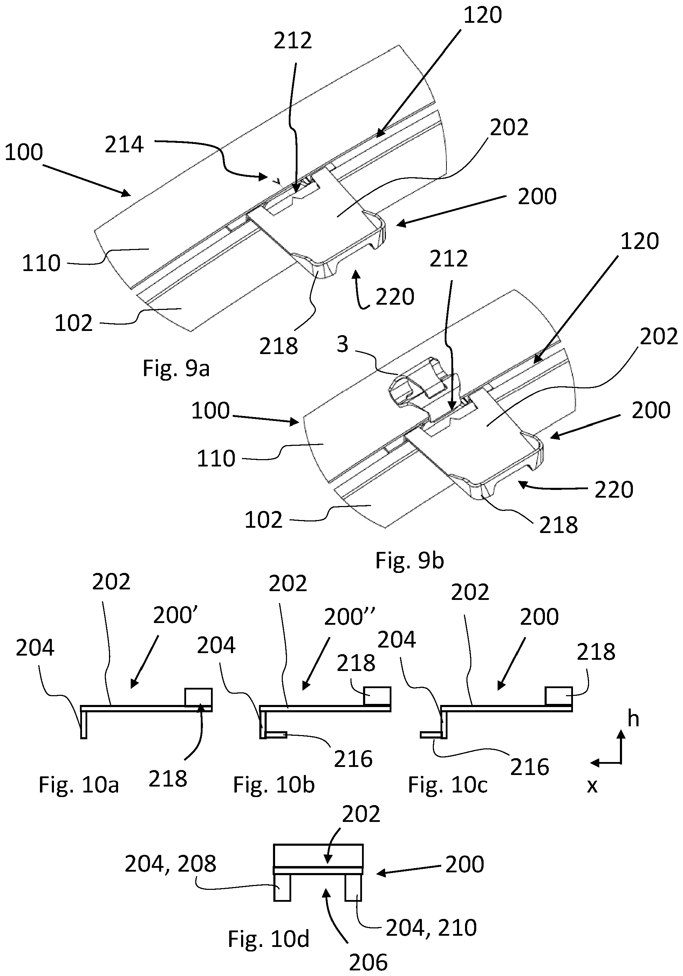

With reference to figs. 9-10, a roof rack alignment tool 200 according to example embodiments of the disclosure is depicted that does not belong to the invention. The roof rack alignment tool 200 is a tool for aligning an engagement member 3 of a roof rack 1 to a vehicle bracket 130 of a vehicle. For example, the engagement member may be an engagement member 3-3‴ as disclosed herein.

The roof rack alignment tool 200 comprises:
- a first surface 202 for parallel alignment to a vehicle roof 110, e.g. the roof top panel 110 as mentioned in the above.

The roof rack alignment tool 200 further comprises:
- a second surface 204 extending at an angle of substantially 90 degrees with respect to the first surface 202. The second surface 204 is configured to extend into a roof channel 120 of the vehicle roof 100 during use. Typically, the roof channel 120 comprises a cover, such as a rubber strap, which the tool 200 may push down when the second surface extends into the roof channel 120. The second surface 204 is illustrated schematically in figs. 10a-c, showing side views of the tool 200.

As shown, the second surface 204 may be a folded portion of the first surface 202.

As further shown in fig. 10d, the second surface 204 may form a cut-out 206 for receiving the engagement member 3 of the roof rack 1 so that the engagement member 3 can engage with the vehicle bracket 130 of the vehicle therethrough. Fig. 10d shows a front side of the tool 200.

The second surface may be formed by first and second leg portions 208, 210, wherein the cut-out 206 is formed in-between the first and second leg portions 208, 210.

The roof rack alignment tool 200 may further comprise a visual alignment indicator 212 for a user, such as an arrow 212, wherein the visual alignment indicator 212 is associated with the cut-out 206, such as provided mid-way in-between the first and second leg portions 208, 210. As shown, the visual alignment indicator 212 may be used to align with an alignment indicator 214 of the vehicle, such as an indicator which is provided on the roof top panel 110.

As shown in figs. 10b and 10c, the roof rack alignment tool 200 may further comprise a third surface 216 for aligning the tool 200 with the vehicle bracket 130 of the vehicle. The third surface 216 extends from an outer edge of the second surface 204. In the shown embodiments, the third surface 216 extends substantially in parallel with the vehicle roof 110 when the roof rack alignment tool 200 is in use.

The third surface 216 may as shown be a folded portion of the second surface 204.

The third surface 216 is typically formed by at least one auxiliary leg portion, such as the at least one auxiliary leg portion is an extension of the first 208 or the second 210 leg portion. The third surface 216 may also be formed by two auxiliary leg portions, each auxiliary leg portion being an extension of the respective first 208 and second 210 leg portions.

In fig. 10b, the first 202, second 204 and third 216 surfaces form a substantially U-shaped tool 200. In fig. 10c, the first 202, second 204 and third 216 surfaces form a substantially step-shaped tool 200, as seen in sectional plane defined by a longitudinal extension x and a height extension h of the tool 200.

The roof rack alignment tool 200 is configured so that it can be moved in a longitudinal direction of the roof channel 120 until it reaches the vehicle bracket 130 of the vehicle, such as until the third surface 216 reaches the vehicle bracket 130 of the vehicle.

In the shown embodiment, the roof rack alignment tool 200 further comprises a fourth surface 218 for a user to grip on. The fourth surface 218 extends from an outer edge of the first surface 202, such as at an angle of substantially 90 degrees with respect to the first surface 202. The fourth surface 218 is provided on an opposite side of the roof rack alignment tool 200 with respect to the second surface 204. By substantially 90 degrees may herein be meant ± 5 degrees or ± 10 degrees from 90 degrees.

As can be gleaned from figs. 9a-b, the fourth surface 218 may be extending around a corner of the first surface 202 to increase the rigidity of the fourth surface 218 and/or of the first surface 202.

As can be further gleaned from figs. 9a-b, the fourth surface 218 may form a cut-out 220 for a user to grip in.

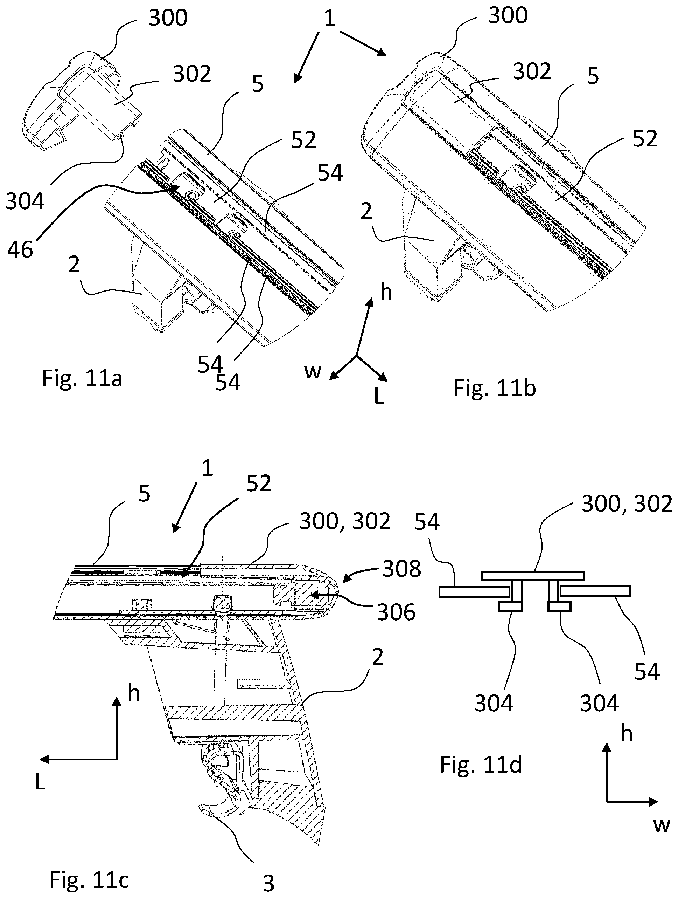

With reference to figs. 11a-d, a roof rack 1 and an end cap 300 according to example embodiments of the present disclosure are shown that do not belong to the invention.

The roof rack 1 may have a cross bar member 5 and a roof rack foot member 2 as disclosed herein, although other configurations are also feasible.

The roof rack 1 as shown in figs. 11a-c comprises:
- a cross bar member 5 for carrying a load on the vehicle, wherein the cross bar member 5 comprises a longitudinally extending cross bar channel 52.

The cross bar channel 52 may for example by used for securing a load to the cross bar member 5, such as used for securing a roof box, a bike carrier or the like. The cross bar channel 52 may for example be used for providing a T-shaped nut therein (not shown), which can be used for securing the load.

The roof rack 1 further comprises an end cap 300 for the cross bar member 5. The end cap 300 comprises a cover 302 for covering an end portion of the cross bar channel 5. In addition, the cross bar channel 52 comprises cover engaging flanges 54 for engaging with an engaging portion 304 of the cover 302 when the end cap 300 is mounted to the cross bar member 5.

In the shown embodiment, the cover engaging flanges 54 extend in a longitudinal direction L of the cross bar channel 52.

Furthermore, the cover engaging flanges 54 and the engaging portion 304 of the cover 302 are configured to allow longitudinal sliding movement of the cover 302 in the cross bar channel 52 and to prevent movement of the cover 302 in an upward direction h from the cross bar channel 52.

The end portion of the cross bar channel 5 comprises a tightening tool engaging portion 46 for tightening and releasing the roof rack 1 to/from the vehicle by use of a tightening tool (not shown), wherein the cover 302 is adapted for preventing unauthorized access to the tightening tool engaging portion 46. In the shown embodiment, the cover 302 is provided above the tightening tool engaging portion 46 and thereby prevents a user to access the tightening tool engaging portion 46 from above when the end cap 300 is mounted on the cross bar member 5.

As shown in fig. 11b, when the end cap 300 is mounted to the cross bar member 5, the cover 302 is substantially flush with an outer surface of the cross bar member 5.

The other portions of the cross bar channel 52 which are not covered by the cover may instead be covered by e.g. a rubber strap cover (not shown), or anything similar.

With reference to fig. 11d, the end cap 300 and the cover engaging flanges 54 are shown in a sectional plane being perpendicular to a longitudinal extension L of the end cap 300 and the cross bar member (5). As shown, the engaging portion 304 of the cover 302 may be T-shaped. Accordingly, the cover engaging flanges 54 may extend in the width extension w so that they prevent the cover 302 from being moved upwardly in the height direction h.

The engaging portion 304 of the cover 302 may at least be provided at a longitudinally outer end of the cover 302.

Furthermore, as can be gleaned from fig. 11c, the end cap 300 may comprise a lock cylinder 306 for locking the end cap 300 to the cross bar member 5. Accordingly, a user may lock the end cap 300 to the cross bar member 5 by rotating the lock cylinder about an axis which extends in the longitudinal extension L of the cross bar member 5. A key may be used for this purpose, which is inserted into the lock cylinder 306 at an outer end face 308 of the end cap 300.

The disclosure also relates to the end cap 300 for a roof rack cross bar member 5 of a roof rack 1. The end cap 300 comprises:
- the cover 302 for covering the end portion of a cross bar channel 52, wherein the cover comprises the engaging portion 304 for engaging with the cover engaging flanges 54 of the cross bar channel 52 when the end cap 300 is mounted to the cross bar member 5.

The cover 302 may have a length of 20-200 mm, such as 40-150 mm or 40-100 mm.

It is to be understood that the present invention is not limited to the embodiments described above and illustrated in the drawings; rather, the skilled person will recognize that many changes and modifications may be made within the scope of the appended claims.

## Claims

1. A roof rack (1) for a vehicle, comprising:
- a roof rack foot member (2) comprising a vehicle roof support surface (22),
- an engagement member (3) for engaging with a vehicle bracket (130) of the vehicle,
- a tightening member (4) for tightening the engagement member (3),
- a cross bar member (5) for carrying a load on the vehicle, wherein the tightening member (4) is coupled to the roof rack foot member (2) and the cross bar member (5) for securing the roof rack (1) to the vehicle, wherein,
the tightening member (4) comprises a first engagement section (42) and the engagement member (3) comprises a second engagement section (32), which first and second engagement sections (42, 32) are connectable and correspondingly configured for tightening the engagement member (3) with respect to the vehicle bracket,
wherein the roof rack (1) has a width extension (w), a height extension (h) and a longitudinal extension (L) corresponding to a longitudinal extension of the cross bar member (5), and wherein the first engagement section (42) is connectable to the second engagement section (32) in a first connection direction (C) which is different from the height extension (h), wherein the first connection direction corresponds to the longitudinal extension (L), wherein the second engagement section (32) comprises an opening (322), such as a slot, for receiving the first engagement section (42) in the first connection direction (C), the opening (322) facing in a direction corresponding to the longitudinal extension (L) of the cross bar member (5), wherein a second roof rack foot member is provided on an opposite side of the cross bar member (5), wherein
the first engagement section (42) is further connectable to the second engagement section (32) in a second connection direction (A) which corresponds to the longitudinal extension of the tightening member (4), such that, when the first engagement section (42) has been inserted into the second engagement section (32) in the first connection direction (C), the first engagement section (42) is moved upwardly towards the cross bar member (5) when the tightening member (4) is tightened, **characterized in that** the first connection direction (C) is directed away, in the longitudinal extension (L), from the second roof rack foot member.

2. The roof rack (1) according to any one of the preceding claims, wherein the first engagement section (42) is configured for tightening the engagement member (3) with respect to the vehicle bracket (130) by application of a first tightening force (F1) exerted on the second engagement section (32), wherein the engagement member (3) comprises an engaging portion (34) for engaging with the vehicle bracket (130) of the vehicle and wherein the tightening member (4) is configured for tightening the engaging portion (34) with respect to the vehicle bracket (130) so that a second tightening force (F2) is exerted on the engaging portion (34) by the vehicle bracket (130), wherein the engagement member (3) is configured so that the second tightening force (F2) and the first tightening force (F1) are substantially aligned.

3. The roof rack (1) according to any one of the preceding claims, wherein the engagement member (3) comprises an engaging portion (34) for engaging with the vehicle bracket (130) of the vehicle and wherein the tightening member (4) comprises a cross bar engaging portion (44) for engaging with the cross bar member (5), wherein the tightening member (4) is configured to transfer forces along a substantially straight line (A) from the engaging portion (34) to the cross bar engaging portion (44).

4. The roof rack (1) according to any one of the preceding claims, wherein the first engagement section (42) is T-formed, L-formed, J-formed, or ball-formed.

5. The roof rack (1) according to any one of the preceding claims, further comprising a biasing member (6) for biasing the tightening member (4) towards a disconnected state with respect to the engagement member (3).

6. The roof rack (1) according to any one of the preceding claims, wherein the roof rack foot member (2) comprises a guide surface (28) for the tightening member (3), such as a guide slot, which is adapted to align the first engagement section (42) with respect to the second engagement section (32) and/or adapted to accommodate forces exerted on the tightening member (4) which are directed in directions different from a longitudinal extension of the tightening member (4).

7. The roof rack (1) according to claim 6, wherein the guide surface (28) is adapted to guide the tightening member (4) in a guiding direction between a disconnected state and a first connected state, wherein the guiding direction corresponds to a longitudinal extension of the cross bar member (5).

8. The roof rack (1) according to any one of the preceding claims, wherein the engagement member (3) is a hook member.

9. The roof rack (1) according to any one of the preceding claims, wherein the engagement member (3) is detachable from the roof rack (1).

10. The roof rack (1) according to any one of the preceding claims, wherein the engagement member (3) is a bent sheet-metal element, such as the second engagement section (32) is formed by bent sheet-metal, for example bent to hook into a slot formed in itself, the engagement member (3) is bent to form an open hook end (34), and/or it is bent to form a closed loop end (38).

11. The roof rack (1) according to any one of the preceding claims, wherein the roof rack foot member (2) is configured to avoid contact with an adjacent glass roof panel (110) of the vehicle when the roof rack is mounted on the vehicle.

12. A method for mounting a roof rack (1) according to any one of claims 1-11 to a vehicle, comprising:
- aligning and positioning (S1) the engagement member (3) with respect to the vehicle bracket (130),
- positioning (S2) the roof rack foot member (2) with the vehicle roof support surface (22) onto the vehicle so that the tightening member (4) is aligned with the engagement member (3),
- tightening (S3) the engagement member (3) by use of the tightening member (4).

## Patentansprüche

1. Dachträger (1) für ein Fahrzeug, umfassend:
- ein Dachträger-Fußelement (2), umfassend eine Fahrzeugdach-Stützoberfläche (22),
- ein Eingriffselement (3) zum Eingriff mit einer Fahrzeughalterung (130) des Fahrzeugs,
- ein Festspannelement (4) zum Festspannen des Eingriffselements (3),
- ein Querstangenelement (5) zum Tragen einer Last auf dem Fahrzeug, wobei das Festspannelement (4) mit dem Dachträger-Fußelement (2) und dem Querstangenelement (5) zum Befestigen des Dachträgers (1) an dem Fahrzeug gekoppelt ist, wobei
das Festspannelement (4) einen ersten Eingriffsabschnitt (42) und das Eingriffselement (3) einen zweiten Eingriffsabschnitt (32) umfasst, wobei der erste und der zweite Eingriffsabschnitt (42, 32) verbindbar und entsprechend konfiguriert sind, um das Eingriffselement (3) in Bezug auf die Fahrzeughalterung festzuziehen, wobei der Dachträger (1) eine Breitenerstreckung (w), eine Höhenerstreckung (h) und eine Längserstreckung (L) aufweist, die einer Längserstreckung des Querstangenelements (5) entspricht, und wobei der erste Eingriffsabschnitt (42) mit dem zweiten Eingriffsabschnitt (32) in einer ersten Verbindungsrichtung (C) verbindbar ist, die sich von der Höhenerstreckung (h) unterscheidet, wobei die erste Verbindungsrichtung der Längserstreckung (L) entspricht, wobei der zweite Eingriffsabschnitt (32) eine Öffnung (322), beispielsweise einen Schlitz, zur Aufnahme des ersten Eingriffsabschnitts (42) in der ersten Verbindungsrichtung (C) umfasst, wobei die Öffnung (322) in eine Richtung zeigt, die der Längserstreckung (L) des Querstangenelements (5) entspricht, wobei auf einer gegenüberliegenden Seite des Querstangenelements (5) ein zweites Dachträger-Fußelement bereitgestellt ist, wobei der erste Eingriffsabschnitt (42) ferner mit dem zweiten Eingriffsabschnitt (32) in einer zweiten Verbindungsrichtung (A) verbindbar ist, die der Längserstreckung des Festspannelements (4) entspricht, so dass, wenn der erste Eingriffsabschnitt (42) in den zweiten Eingriffsabschnitt (32) in der ersten Verbindungsrichtung (C) eingeführt wurde, der erste Eingriffsabschnitt (42) nach oben in Richtung des Querstangenelements (5) bewegt wird, wenn das Festspannelement (4) festgezogen wird, **dadurch gekennzeichnet, dass** die erste Verbindungsrichtung (C) in der Längserstreckung (L) von dem zweiten Dachträger-Fußelement weg weist.

2. Dachträger (1) nach einem der vorstehenden Ansprüche, wobei der erste Eingriffsabschnitt (42) zum Festspannen des Eingriffselements (3) in Bezug auf die Fahrzeughalterung (130) durch Anlegen einer auf den zweiten Eingriffsabschnitt (32) ausgeübten ersten Festspannkraft (F1) konfiguriert ist, wobei das Eingriffselement (3) ein Eingriffsteil (34) zum Ineingriffbringen mit der Fahrzeughalterung (130) des Fahrzeugs umfasst, und wobei das Festspannelement (4) zum Festspannen des Eingriffsteils (34) in Bezug auf die Fahrzeughalterung (130) konfiguriert ist, so dass durch die Fahrzeughalterung (130) eine zweite Festspannkraft (F2) auf das Eingriffsteil (34) ausgeübt wird, wobei das Eingriffselement (3) konfiguriert ist, so dass die zweite Festspannkraft (F2) und die erste Festspannkraft (F1) im Wesentlichen ausgerichtet sind.

3. Dachträger (1) nach einem der vorstehenden Ansprüche, wobei das Eingriffselement (3) ein Eingriffsteil (34) zum Ineingriffbringen mit der Fahrzeughalterung (130) des Fahrzeugs umfasst und wobei das Festspannelement (4) ein Querstangen-Eingriffsteil (44) zum Ineingriffbringen mit dem Querstangenelement (5) umfasst, wobei das Festspannelement (4) konfiguriert ist, um Kräfte entlang einer im Wesentlichen geraden Linie (A) von dem Eingriffsteil (34) zu dem Querstangen-Eingriffsteil (44) zu übertragen.

4. Dachträger (1) nach einem der vorstehenden Ansprüche, wobei der erste Eingriffsabschnitt (42) T-förmig, L-förmig, J-förmig oder kugelförmig ist.

5. Dachträger (1) nach einem der vorstehenden Ansprüche, ferner umfassend ein Vorspannelement (6) zum Vorspannen des Festspannelements (4) in Richtung eines getrennten Zustands in Bezug auf das Eingriffselement (3).

6. Dachträger (1) nach einem der vorstehenden Ansprüche, wobei das Dachträger-Fußelement (2) eine Führungsoberfläche (28) für das Festspannelement (3), wie einen Führungsschlitz, umfasst, der dazu ausgelegt ist, den ersten Eingriffsabschnitt (42) in Bezug auf den zweiten Eingriffsabschnitt (32) auszurichten und/oder dazu ausgelegt ist, auf das Festspannelement (4) ausgeübte Kräfte unterzubringen, die in Richtungen gerichtet sind, die sich von einer Längserstreckung des Festspannelements (4) unterscheiden.

7. Dachträger (1) nach Anspruch 6, wobei die Führungsoberfläche (28) dazu ausgelegt ist, das Festspannelement (4) in einer Führungsrichtung zwischen einem getrennten Zustand und einem ersten verbundenen Zustand zu führen, wobei die Führungsrichtung einer Längserstreckung des Querstangenelements (5) entspricht.

8. Dachträger (1) nach einem der vorstehenden Ansprüche, wobei das Eingriffselement (3) ein Hakenelement ist.

9. Dachträger (1) nach einem der vorstehenden Ansprüche, wobei das Eingriffselement (3) von dem Dachträger (1) abnehmbar ist.

10. Dachträger (1) nach einem der vorstehenden Ansprüche, wobei das Eingriffselement (3) ein gebogenes Blechelement ist, wie der zweite Eingriffsabschnitt (32), der durch gebogenes Blech geformt wird, zum Beispiel gebogen ist, um in einen in sich selbst geformten Schlitz einzuhaken, wobei das Eingriffselement (3) gebogen ist, um ein offenes Hakenende (34) zu formen, und/oder gebogen ist, um ein geschlossenes Ösenende (38) zu formen.

11. Dachträger (1) nach einem der vorstehenden Ansprüche, wobei das Dachträger-Fußelement (2) konfiguriert ist, um einen Kontakt mit einer benachbarten Glasdachplatte (110) des Fahrzeugs zu vermeiden, wenn der Dachträger auf dem Fahrzeug montiert ist.

12. Verfahren zum Montieren eines Dachträgers (1) nach einem der Ansprüche 1 bis 11 an einem Fahrzeug, umfassend:
- Ausrichten und Positionieren (S1) des Eingriffselements (3) in Bezug auf die Fahrzeughalterung (130),
- Positionieren (S2) des Dachträger-Fußelements (2) mit der Fahrzeugdach-Stützoberfläche (22) auf dem Fahrzeug, so dass das Festspannelement (4) mit dem Eingriffselement (3) ausgerichtet ist,
- Festspannen (S3) des Eingriffselements (3) durch Verwendung des Festspannelements (4).

## Revendications

1. Galerie de toit (1) pour un véhicule, comprenant :
- un élément de pied de galerie de toit (2) comprenant une surface de support de toit de véhicule (22),
- un élément de mise en prise (3) pour venir en prise avec un support de véhicule (130) du véhicule,
- un élément de serrage (4) pour serrer l'élément de mise en prise (3),
- un élément de barre transversale (5) pour porter une charge sur le véhicule, dans laquelle l'élément de serrage (4) est accouplé à l'élément de pied de galerie (2) et à l'élément de barre transversale (5) pour fixer la galerie de toit (1) au véhicule, dans laquelle,
l'élément de serrage (4) comprend une première section de mise en prise (42) et l'élément de mise en prise (3) comprend une seconde section de mise en prise (32), lesquelles première et seconde sections de mise en prise (42, 32) sont reliables et conçues de manière correspondante pour serrer l'élément de mise en prise (3) par rapport au support du véhicule, dans laquelle la galerie de toit (1) présente une extension en largeur (w), une extension en hauteur (h) et une extension longitudinale (L) correspondant à une extension longitudinale de l'élément de barre transversale (5), et dans laquelle la première section de mise en prise (42) peut être reliée à la seconde section de mise en prise (32) dans une première direction de connexion (C) différente de l'extension en hauteur (h), dans laquelle la première direction de connexion correspond à l'extension longitudinale (L), dans laquelle la seconde section de mise en prise (32) comprend une ouverture (322), telle qu'une fente, pour recevoir la première section de mise en prise (42) dans la première direction de liaison (C), l'ouverture (322) est orientée dans une direction correspondant à l'extension longitudinale (L) de la barre transversale (5), dans laquelle un second élément de pied de galerie de toit est prévu sur un côté opposé de la barre transversale (5), dans laquelle la première section de mise en prise (42) peut être reliée à la seconde section de mise en prise (32) dans une seconde direction de liaison (A) qui correspond à l'extension longitudinale de l'élément de serrage (4), de sorte que, lorsque la première section de mise en prise (42) a été insérée dans la seconde section de mise en prise (32) dans la première direction de liaison (C), la première section de mise en prise (42) est déplacée vers le haut en direction de la barre transversale (5) lorsque l'élément de serrage (4) est serré, **caractérisée en ce que** la première direction de liaison (C) est dirigée à l'opposé, dans l'extension longitudinale (L), du second élément de pied de la galerie de toit.

2. Galerie de toit (1) selon l'une quelconque des revendications précédentes, dans laquelle la première section de mise en prise (42) est conçue pour serrer l'élément de mise en prise (3) par rapport au support de véhicule (130) par application d'une première force de serrage (F1) exercée sur la seconde section de mise en prise (32), dans laquelle l'élément de mise en prise (3) comprend une partie de mise en prise (34) pour venir en prise avec le support de véhicule (130) du véhicule et dans laquelle l'élément de serrage (4) est conçu pour serrer la partie de mise en prise (34) par rapport au support de véhicule (130) de sorte qu'une seconde force de serrage (F2) est exercée sur la partie de mise en prise (34) par le support de véhicule (130), dans laquelle l'élément de mise en prise (3) est conçu de sorte que la seconde force de serrage (F2) et la première force de serrage (F1) sont substantiellement alignées.

3. Galerie de toit (1) selon l'une quelconque des revendications précédentes, dans laquelle l'élément de mise en prise (3) comprend une partie de mise en prise (34) pour venir en prise avec le support de véhicule (130) du véhicule et dans laquelle l'élément de serrage (4) comprend une partie de mise en prise de barre transversale (44) pour venir en prise avec la barre transversale (5), dans laquelle l'élément de serrage (4) est conçu pour transférer les forces le long d'une ligne sensiblement droite (A) de la partie de mise en prise (34) à la partie de mise en prise de la barre transversale (44).

4. Galerie de toit (1) selon l'une quelconque des revendications précédentes, dans laquelle la première section de mise en prise (42) est formée en T, en L, en J ou en boule.

5. Galerie de toit (1) selon l'une quelconque des revendications précédentes, comprenant en outre un élément de sollicitation (6) pour solliciter l'élément de serrage (4) vers un état déconnecté par rapport à l'élément de mise en prise (3).

6. Galerie de toit (1) selon l'une quelconque des revendications précédentes, dans laquelle l'élément de pied de galerie de toit (2) comprend une surface de guidage (28) pour l'élément de serrage (3), telle qu'une fente de guidage, qui est adaptée pour aligner la première section de mise en prise (42) par rapport à la seconde section de mise en prise (32) et/ou adaptée pour accommoder les forces exercées sur l'élément de serrage (4) qui sont dirigées dans des directions différentes d'une extension longitudinale de l'élément de serrage (4).

7. Galerie de toit (1) selon la revendication 6, dans laquelle la surface de guidage (28) est adaptée pour guider l'élément de serrage (4) dans une direction de guidage entre un état déconnecté et un premier état connecté, dans laquelle la direction de guidage correspond à une extension longitudinale de la barre transversale (5).

8. Galerie de toit (1) selon l'une quelconque des revendications précédentes, dans laquelle l'élément de mise en prise (3) est un élément de crochet.

9. Galerie de toit (1) selon l'une quelconque des revendications précédentes, dans laquelle l'élément de mise en prise (3) est détachable de la galerie de toit (1).

10. Galerie de toit (1) selon l'une quelconque des revendications précédentes, dans laquelle l'élément de mise en prise (3) est un élément en tôle pliée, tel que la seconde section de mise en prise (32) est formée de tôle pliée, par exemple pliée pour s'accrocher dans une fente formée en elle-même, l'élément de mise en prise (3) est plié pour former une extrémité de crochet ouverte (34), et/ou il est plié pour former une extrémité de boucle fermée (38).

11. Galerie de toit (1) selon l'une quelconque des revendications précédentes, dans laquelle l'élément de pied de galerie de toit (2) est conçu pour éviter tout contact avec un panneau de toit en verre adjacent (110) du véhicule lorsque la galerie de toit est montée sur le véhicule.

12. Procédé de montage d'une galerie de toit (1) selon l'une quelconque des revendications 1 à 11 sur un véhicule, comprenant :
- l'alignement et la position (S1) de l'élément de mise en prise (3) par rapport au support de véhicule (130),
- le positionnement (S2) de l'élément de pied de galerie de toit (2) avec la surface de support de toit de véhicule (22) sur le véhicule de sorte que l'élément de serrage (4) soit aligné avec l'élément de mise en prise (3),
- le serrage (S3) de l'élément de mise en prise (3) à l'aide de l'élément de serrage (4).
